# EUROPEAN PATENT SPECIFICATION

(11) **EP 1 889 277 B1**
(45) Date of publication and mention of the grant of the patent: **13.05.2009**
(21) Application number: 06744090.9
(22) Date of filing: 02.06.2006
(51) Int. Cl.: H01J 9/52, B03B 9/06

(54) **APPARATUS AND METHOD FOR CUTTING A CATHODE RAY TUBE**
VORRICHTUNG UND VERFAHREN ZUM SCHNEIDEN EINER KATHODENSTRAHLRÖHRE
APPAREIL ET PROCEDE DE DECOUPE D'UN TUBE CATHODIQUE

(30) Priority: 03.06.2005 GB 0511401
(43) Date of publication of application: 20.02.2008
(73) Proprietor: CRT Heaven Ltd, Highbridge TA9 4AG (GB)
(72) Inventor: HARRIS, David, John, Wellington TA21 0DS (GB); SEACROFT, Neil, Robert, Somerset TA5 2HF (GB)
(74) Representative: Cheyne, John Robert Alexander M.
(86) International application number: PCT/GB2006/002036
(87) International publication number: WO 2006/129114

(56) References cited:
- EP-A- 0 822 014
- EP-A- 1 475 153
- US-A1- 2003 233 919
- US-B1- 6 837 410
- PATENT ABSTRACTS OF JAPAN vol. 1997, no. 02, 28 February 1997 (1997-02-28) -& JP 08 273547 A (SONY CORP), 18 October 1996 (1996-10-18)

## Description

The present invention relates to an apparatus and method for cutting a cathode ray tube, and in particular, to cutting a cathode ray tube (CRT) into two parts for the purpose of recycling of its component parts.

### Background of the invention

CRTs are used, inter alia, in televisions, computer monitors and monitors for specialist applications, for example, in cash dispensers and industrial applications. In the UK alone, it is estimated that around 100,000 tonnes of CRTs are scrapped every year and require disposal. A CRT has a funnel section and a neck section, which are typically made from glass containing high levels of lead oxide. The funnel section is attached to a screen, which is typically made from glass containing high levels of barium oxide. The screen and funnel section are connected at a circumferential joint, known as a frit joint, which contains high levels of lead.

Furthermore, the inside surface of the screen is coated with a fluorescent powder comprising a mixture of phosphors. The coating may also contain cadmium and other heavy metals. When a screen is separated from a funnel section for recycling, as disclosed in WO 03/081626 A1, in the name of Holappa and Leskinen, the coating must be removed before the glass in the screen can be recycled. This is usually achieved by the coating being brushed by hand by an operator, and the dust removed by a vacuum hose. This exposes the operator to an environment in which there are airborne phosphors and heavy metals, which are dangerous to health.

It is widely appreciated that CRTs should be disposed of in a controlled environment, which minimises the risk to health. There is therefore a need to provide an apparatus and method which is capable of separating the funnel and screen of a CRT in a controlled environment, and which is capable of removing the coating on the inside of the screen.

Patent application JP08273457 discloses an apparatus for cutting a CRT. The CRT is displaced between two sensors, the size of the CRT is detected and the CRT ist cut.

Patent application publication US2003/0233919 A1 discloses an apparatus for separating a funnel portion of a CRT. The apparatus is adapted to first displace the CRT, then to cut opposing sides of the CRT by a first set of saws. The CRT is then rotated of 90 degrees and a second set of saws cuts the opposing sides of the CRT.

### Summary of the Invention

According to the present invention there is provided an apparatus for cutting a cathode ray tube of claim 1 screen, first and second sensors for determining the external dimensions of the screen, first and second diamond cutting means spaced a variable distance apart, and displacement means for moving the support means relative to the diamond cutting means.

Preferably the displacement means is adapted to move the support means between.

Preferably the displacement means is adapted to move the support means relative to the diamond cutting means at a variable speed.

The displacement means is preferably a table mounted on parallel rails.

Preferably the displacement means is driven by a variable speed electric or hydraulic motor through a rack and pinion.

Preferably the vertical position of the support means relative to the first and second cutting means is adjustable.

Preferably the spacing of the diamond cutting means is set in response to a reading of the external dimensions of the screen determined by the first and second sensors.

Preferably the first and second diamond cutting means are each mounted on a slider, the axis of movement of which is perpendicular to an axis of displacement of the support means.

Preferably the first and second sensors are optical or ultrasonic.

Preferably the diamond cutting means each comprise cutting wheels with a diamond coated periphery.

Preferably a second support means is provided for the funnel of the cathode ray tube.

Preferably a brush or brushes are disposed for orbital movement in a plane perpendicular to a vertical axis of the support means.

Preferably air extraction is provided for the brush or brushes.

Preferably air extraction is provided for each of the first and second diamond cutting means.

Preferably the apparatus is disposed in a cabinet, air flow from which is continuously extracted and filtered to remove airborne particles.

According to a second aspect of the present invention there is provided a method of cutting a cathode ray tube having a funnel and screen comprising the steps of, supporting the screen of the cathode ray tube from below using support means, determining the external dimensions of the screen using first and second sensors, passing the cathode ray tube between spaced first and second diamond cutting means in a first direction to cut through opposed sides of the cathode ray tube, rotating the cathode ray tube through an angle of 90 degrees, and passing the cathode ray tube back between the spaced first and second diamond cutting means in the other direction to cut through the other opposed sides of the cathode ray tube, thereby separating the screen from the funnel.

Preferably the speed of movement of the cathode ray tube through the sensors and cutting means is varied for the purpose of optimising the utilisation of the apparatus.

Preferably the first and second diamond cutting means are spaced in response to the reading of the external dimensions of the screen determined by the first and second sensors.

Preferably the spacing between the first and second diamond cutting means is reset between the first and second passes of the cathode ray tube between the cutting means.

### Brief description of the drawings

For a better understanding of the present invention, and to show more clearly how it may be carried into effect, reference will now be made, by way of example, to the accompanying drawings, in which:-
Fig 1 shows a schematic side view of an apparatus for cutting a cathode ray tube in accordance with the invention;
Fig 2 shows an alternative schematic side view of the apparatus of Fig 1, with a displacement and support means shown in cross section in first and second positions;
Fig 3 shows a schematic plan view from above of a cathode ray tube being passed though a pair of diamond cutting wheels on a first pass;
Fig 4 shows a schematic plan view from above of the cathode ray tube being passed though the pair of diamond cutting wheels on a second pass;
Fig 5 shows a schematic side view of a power brushing assembly; and
Fig 6 shows a schematic cross-sectional view of the brushing assembly of Fig 5 in use.

### Detailed description of illustrated embodiment

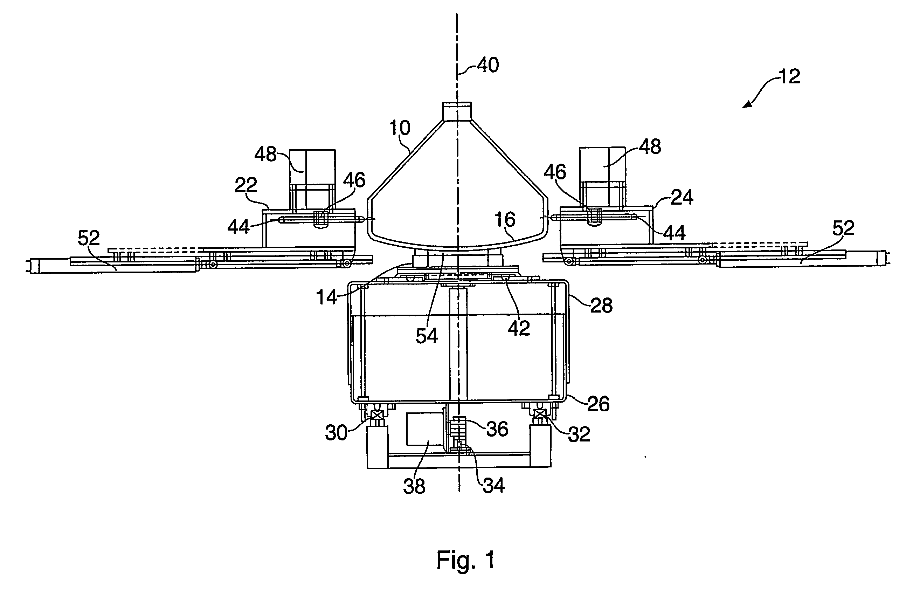

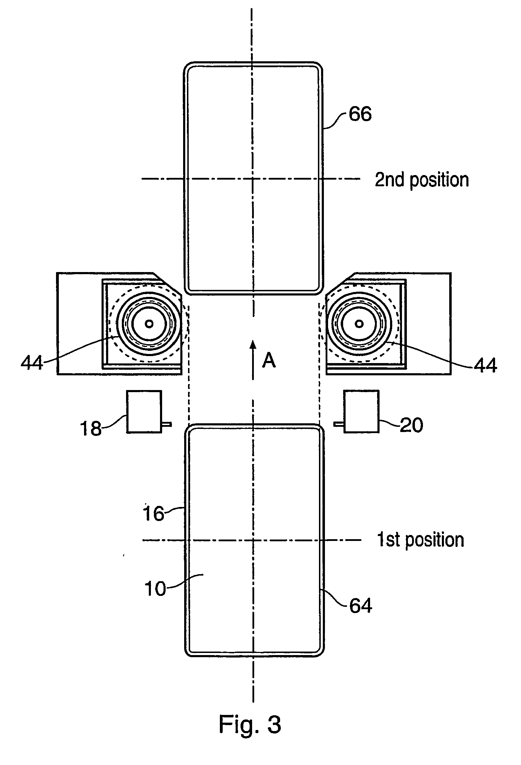

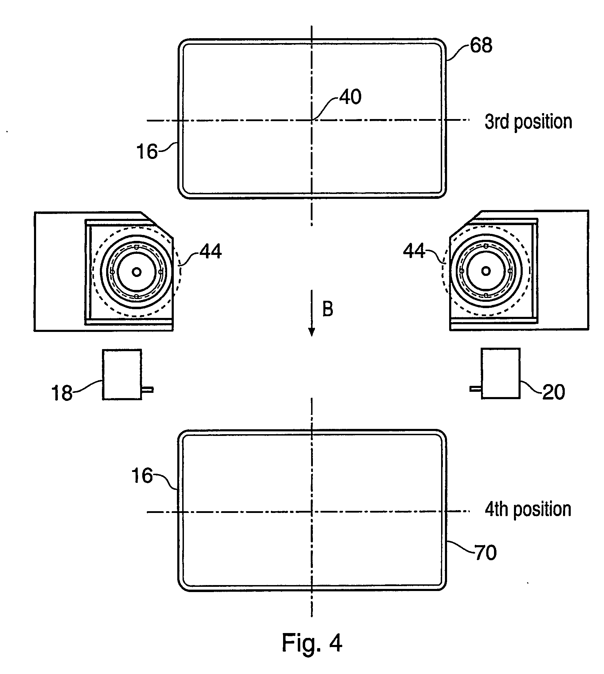

Referring firstly to Fig 1, an apparatus for cutting a cathode ray tube 10 is indicated generally at 12. The apparatus 12 comprises a support means 14 for supporting the screen 16 of the cathode ray tube 10, first and second sensors 18,20 (shown in Figs 3 and 4) for determining the external dimensions of the screen 16, first and second spaced diamond cutting means 22,24, and displacement means 26 for moving the support means 14 relative to the diamond cutting means 22,24.

The displacement means 26 comprises a movable table 28 mounted on spaced parallel rails 30, 32. The table 28 is powered along the rails 30, 32 by means of a rack and pinion 34, 36. The rack 34 is rigidly fixed beneath the table 28, in alignment with and between the rails 30, 32. A motor 38 is slung beneath the table 28, which drives the pinion 36. The motor 38 is a variable speed hydraulic or electric motor.

The support means 14 and upper surface of the table 28 are vertically adjustable relative to the height of the rails 30, 32 and the diamond cutting means 22, 24. This is to enable accurate cutting of the cathode ray tube 10 below the frit joint, because the frit joint include a high proportion of lead, as does the funnel portion of the CRT 10. The vertical adjustment of the table 28 can be powered hydraulically or electrically.

The angular position of the support means 14 is also adjustable about a vertical axis 40, which is perpendicular to the plane of the table 28. A slew ring is provided in the support means 14 which enables rotation of the support means 14 about the axis 40. The slew ring 42 should be sufficiently strong to support the load of a CRT 10 having a 107 cm (42 inch) screen. The slew ring 42 can be powered by means of an electric or hydraulic motor.

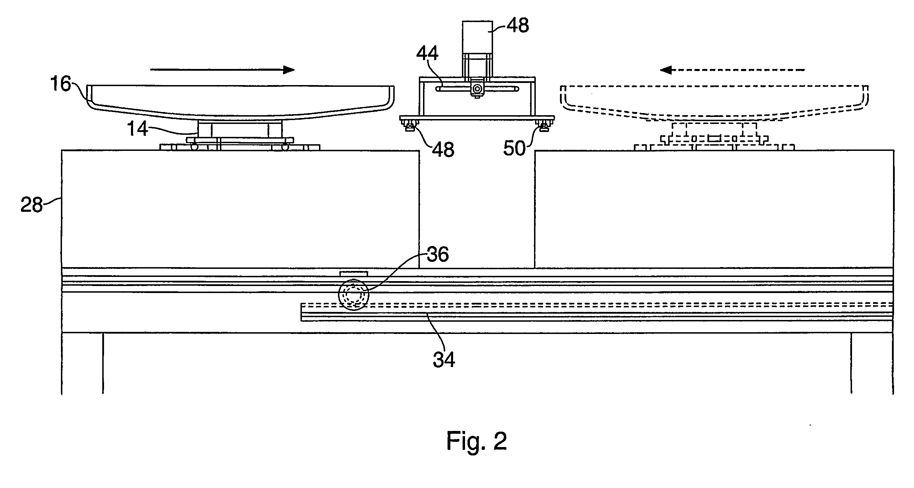

Each diamond cutting means 22, 24 includes a diamond cutting wheel 44, which comprises a metal wheel with a diamond coated periphery. Each diamond cutting wheel is mounted on the drive shaft 46 of a hydraulic or electric motor 48. Each cutting means 22, 24 is slidably mounted on rails 48, 50 (shown in Figure 2) and is urged backwards and forwards along the rails by means of a hydraulic cylinder 52. As will be explained in more detail below, the position of the cutting means 22, 24 is set in response to a reading of the external dimensions of the screen 16 of the CRT 10 by the first and second sensors 18, 20.

The CRT 10 is held in position on the support means 14 by means of a vacuum pad 54 which acts on the viewing surface of the screen 16.

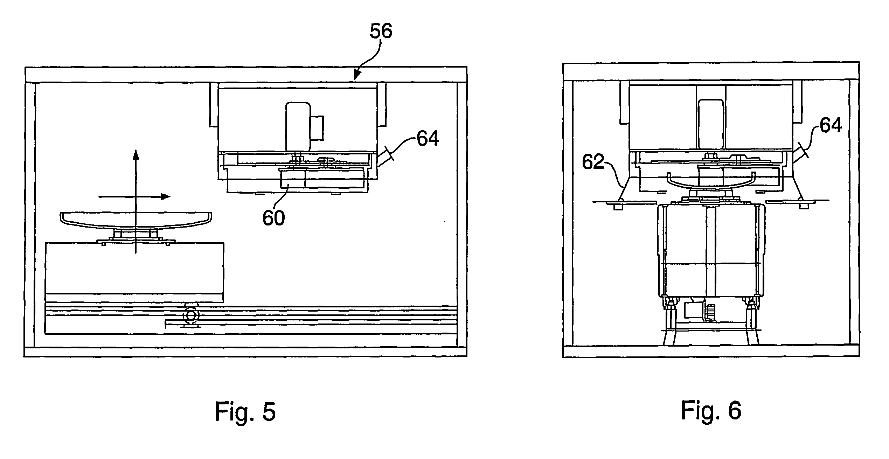

Referring now to Figure 5, the apparatus 12 also includes a brush assembly, indicated at 56, which is used to remove the phosphor coating from the inside of a screen 16, once separated from the rest of the CRT 10. The brush assembly 56 comprises an hydraulic or electric motor which powers one or more brushes 60 to move in an orbital action. The brush assembly 56 is contained within a cabinet 62, shown more clearly in Figure 6, and a dust extraction unit is connected to the cabinet by means of a hose 64 at the area of brushing. The brush assembly 56 is disposed vertically above a position of the movable table 28, or above a second movable table of similar design, further along a recycling process plant.

In operation, a CRT 10 is positioned with its screen 16 supported face down on the vacuum pad 54. As shown in Figure 3, the CRT 10 is in a first position, indicated at 64, at this point in time. The CRT 10 is then moved between the sensors 18, 20 on the table 28 in the direction of arrow A. The sensors determine the width of the screen 16, from which the first and second cutting wheels are moved by the first and second cutting means 22, 24 to an optimum position for cutting through the glass of the screen along opposed sides. The screen is then advanced through the cutting wheels in the direction of arrow A to a second position, indicated at 66. As the screen passes the sensors 18, 20, the sensors detect the length of the screen 16, ie the length of the sides of the screen that is cut, and the CRT 10 is rotated through 90° about the vertical axis 40 to a third position indicated at 68 in Figure 4.

The cutting means 22, 24 are then moved to a position such that the diamond cutting wheels 44 can optimally cut through the glass of the other opposed sides of the screen, and the table and screen is moved back through the diamond cutting wheels 44 in the direction of arrow B. The funnel of the CRT 10 is thus separated from the screen 16 and is supported and removed from above. Finally, the screen moves to the fourth position indicated at 70 in Figure 4. The speed of movement of the table past the first and second cutting means 22, 24 is varied to optimise the utilisation of the apparatus. In other words, the table is advanced at high speed from the rest positions to the point of cutting, the table is then slowed to the optimum cutting speed, and when cutting is completed the table is accelerated to the next rest position.

After separation of the screen, the table 28 is advanced to a position underneath the brush assembly 56. Alternatively, the screen 16 is transferred to a further table and support apparatus 14, which is then subsequently moved to the brush assembly 56. The height of the table above the rails 30, 32 is then increased, until the inside of the screen contacts the brushes 60. Operation of the brushes then causes the brushes to remove the phosphor coating from the inside of the screen 16. The brushes remove sufficient of the phosphor coating to enable the screen to be handled in an uncontrolled environment prior to be recycled. In the recycling process, the screen is also chemically cleaned.

In a further embodiment, not shown, the brush assembly comprises a pair of roller brushes, which are disposed with axes in substantially the same plane, which may be horizontal. The axes of the rollers are not parallel with one another, but have an angle between them, and the rollers are driven to counter-rotate. This facilitates the removal of the phosphor coating, particularly in the corners of the screen 16. This arrangement is preferred for removing the coating from large screens, for example, 106cm (42 inch).

Both the cutting and brushing is controlled by means of a computer control system, and as cutting and brushing is taking place, air flow from respective cabinets is continuously extracted and filtered to remove airborne particles. Cabinets are provided around all parts of the apparatus, which are maintained at a slightly negative pressure by means of air extraction, in order to ensure that airborne particles from the cutting and brushing processes are not freely released to the surrounding atmosphere.

The apparatus 12 and its method of operation enable cathode ray tubes of different sizes to be cut up prior to recycling, both at high speed and without risk to human health.

## Claims

1. An apparatus (12) for cutting a cathode ray tube (10) having a funnel and a screen (16) comprising a support means (14) for supporting the screen (16), first and second sensors (18,20) for determining the external dimensions of the screen (16), first and second diamond cutting means (22,24) spaced a variable distance apart, displacement means (26) for moving the support means (14) relative to the diamond cutting means (22,24), and rotation means (42) for adjusting the angular position of the support means (14) about a vertical axis perpendicular to the plane of the supporting means, wherein, the apparatus (12) is adapted to operate by displacing a cathode ray tube (10) in a first direction between the cutting means (22,24) to perform a first cut, **characterized in that** the apparatus is adapted to operate by rotating the support member (14) through 90°, and by displacing the cathode ray tube (10) in a second direction opposite to the first direction between said cutting means (22,24) to perform a second cut.

2. An apparatus as claimed in claim 1, **characterised in that** the displacement means (26) is adapted to move the support means (14) relative to the diamond cutting means (22,24) at a variable speed.

3. An apparatus as claimed in claim 1, **characterised in that** the displacement means (26) is a table (28) mounted on parallel rails (30,32).

4. An apparatus as claimed in any preceding claim, **characterised in that** the displacement means (26) is driven by a variable speed electric or hydraulic motor (38) through a rack and pinion (34,36).

5. An apparatus as claimed in any preceding claim, **characterised in that** the vertical position of the support means (14) relative to the first and second cutting means (22,24) is adjustable.

6. An apparatus as claimed in any preceding claim, **characterised in that** the spacing of the diamond cutting means (22,24) is set in response to a reading of the external dimensions of the screen (16) determined by the first and second sensors (18,20).

7. An apparatus as claimed in any preceding claim, **characterised in that** the first and second diamond cutting means (22,24) are each mounted on a slider, the axis of movement of which is perpendicular to an axis of displacement of the support means (14).

8. An apparatus as claimed in any preceding claim, **characterised in that** the first and second sensors (18,20) are optical or ultrasonic.

9. An apparatus as claimed in any preceding claim, **characterised in that** the diamond cutting means (22,24) each comprise a cutting wheel (44) with a diamond-coated periphery.

10. An apparatus as claimed in any preceding claim, **characterised in that** a second support means is provided for the funnel of the cathode ray tube (10).

11. An apparatus as claimed in any preceding claim, **characterised in that** a brush or brushes (56) are disposed for orbital movement in a plane perpendicular to a vertical axis of the support means (14).

12. An apparatus as claimed in claim 11, **characterised in that** air extraction (64) is provided for the brush or brushes (56).

13. An apparatus as claimed in any preceding claim, **characterised in that** air extraction is provided for each of the first and second diamond cutting means (22,24).

14. An apparatus as claimed in any preceding claim, **characterised in that** the apparatus (12) is disposed in a cabinet (62), air flow from which is continuously extracted and filtered to remove airborne particles.

15. A method of cutting a cathode ray tube (10) having a funnel and screen (16) comprising the steps of: supporting the screen (16) of the cathode ray tube (10) from below using support means (14), determining the external dimensions of the screen using first and second sensors (18,20), passing the cathode ray tube (10) between spaced first and second diamond cutting means (22,24) in a first direction to cut through opposed sides of the cathode ray tube (10); **characterised in that** the method further comprises the steps of:
rotating the cathode ray tube (10) through an angle of 90 degrees, and passing the cathode ray tube (10) back between the spaced first and second diamond cutting means (22,24) in a second direction opposite to the first direction to cut through the other opposed sides of the cathode ray tube (10), thereby separating the screen (16) from the funnel.

16. A method as claimed in claim 15, **characterised in that** the speed of movement of the cathode ray tube (10) through the sensors (18,20) and cutting means (22,24) is varied for the purpose of optimising the utilisation of the apparatus.

17. A method as claimed in claim 15 or 16, **characterised in that** the first and second diamond cutting means (22,24) are spaced in response to the reading of the external dimensions of the screen (16) determined by the first and second sensors (18,20).

18. A method as claimed in any one of claims 15 to 17, **characterised in that** the spacing between the first and second diamond cutting means (22,24) is reset between the first and second passes of the cathode ray tube (10) between the cutting means (22,24).

## Patentansprüche

1. Vorrichtung (12) zum Schneiden einer Kathodenstrahlröhre (10) mit einem Trichter und einem Schirm (16), umfassend eine Halteeinrichtung (14) zum Halten des Schirms (16), einen ersten und einen zweiten Sensor (18, 20) zum Ermitteln der Außenabmessungen des Schirms (16), eine erste und eine zweite Diamantschneideeinrichtung (22, 24), die in einem variablen Abstand voneinander angebracht sind, eine Versetzungseinrichtung (26) zum Bewegen der Halteeinrichtung (14) relativ zu den Diamantschneideeinrichtungen (22, 24) sowie eine Dreheinrichtung (42) zum Einstellen der Winkelposition der Haltevorrichtung (14) um eine vertikale Achse senkrecht zur Ebene der Halteeinrichtung, wobei die Vorrichtung (12) ausgelegt ist für das Versetzen einer Kathodenstrahlröhre (10) in einer ersten Richtung zwischen den Schneideeinrichtungen (22, 24), so dass ein erster Schnitt ausgeführt wird, **dadurch gekennzeichnet, dass** die Vorrichtung ausgelegt ist für das Drehen der Halteeinrichtung (14) über 90° und das Versetzen der Kathodenstrahlröhre (10) zwischen den Schneideeinrichtungen (22, 24) in einer zweiten Richtung, die zu der ersten Richtung entgegengesetzt ist, so dass ein zweiter Schnitt ausgeführt wird.

2. Vorrichtung nach Anspruch 1, **dadurch gekennzeichnet, dass** die Versetzungseinrichtung (26) ausgelegt ist für das Bewegen der Halteeinrichtung (14) mit variabler Geschwindigkeit relativ zu den Diamantschneideeinrichtungen (22, 24).

3. Vorrichtung nach Anspruch 1, **dadurch gekennzeichnet, dass** die Versetzungseinrichtung (26) ein auf parallelen Schienen (30, 32) montierter Tisch (28) ist.

4. Vorrichtung nach einem vorhergehenden Anspruch, **dadurch gekennzeichnet, dass** die Versetzungseinrichtung (26) angetrieben wird von einem elektrischen oder hydraulischen Motor (38) mit variabler Geschwindigkeit über eine Zahnstange (34, 36).

5. Vorrichtung nach einem vorhergehenden Anspruch, **dadurch gekennzeichnet, dass** die vertikale Position der Halteeinrichtung (14) relativ zu der ersten und der zweiten Schneideeinrichtung (22, 24) einstellbar ist.

6. Vorrichtung nach einem vorhergehenden Anspruch, **dadurch gekennzeichnet, dass** der Abstand der Diamantschneideeinrichtungen (22, 24) eingestellt wird je nach einer Ablesung der Außenabmessungen des Schirms (16), die vom ersten und zweiten Sensor (18, 20) ermittelt wird.

7. Vorrichtung nach einem vorhergehenden Anspruch, **dadurch gekennzeichnet, dass** die erste und die zweite Diamantschneideeinrichtung (22, 24) jeweils auf einem Schieber montiert sind, dessen Bewegungsachse senkrecht zu einer Versetzungsachse der Halteeinrichtung (14) verläuft.

8. Vorrichtung nach einem vorhergehenden Anspruch, **dadurch gekennzeichnet, dass** der erste und der zweite Sensor (18, 20) optische oder UltraschallSensoren sind.

9. Vorrichtung nach einem vorhergehenden Anspruch, **dadurch gekennzeichnet, dass** die Diamantschneideeinrichtungen (22, 24) jeweils eine Trennscheibe (44) mit diamantenbeschichtetem Umfang aufweisen.

10. Vorrichtung nach einem vorhergehenden Anspruch, **dadurch gekennzeichnet, dass** eine zweite Halteeinrichtung für den Trichter der Kathodenstrahlröhre (10) bereitgestellt wird.

11. Vorrichtung nach einem vorhergehenden Anspruch, **dadurch gekennzeichnet, dass** eine Bürste oder Bürsten (56) für eine kreisförmige Bewegung in einer Ebene senkrecht zu einer vertikalen Achse der Halteeinrichtung (14) befestigt ist/sind.

12. Vorrichtung nach Anspruch 11, **dadurch gekennzeichnet, dass** eine Luftabsaugung (64) für die Bürste oder Bürsten (56) bereitgestellt wird.

13. Vorrichtung nach einem vorhergehenden Anspruch, **dadurch gekennzeichnet, dass** jeweils eine Luftabsaugung für die erste und die zweite Diamantschneideeinrichtung (22, 24) bereitgestellt wird.

14. Vorrichtung nach einem vorhergehenden Anspruch, **dadurch gekennzeichnet, dass** die Vorrichtung (12) in einem Gehäuse (62) untergebracht ist, aus dem der Luftstrom stetig abgesaugt und gefiltert wird, so dass in der Luft befindliche Partikel entfernt werden.

15. Verfahren zum Schneiden einer Kathodenstrahlröhre (10) mit einem Trichter und einem Schirm (16), umfassend die folgenden Schritte: Halten des Schirms (16) der Kathodenstrahlröhre (10) von unten unter Verwendung der Halteeinrichtung (14), Ermitteln der Außenabmessungen des Schirms unter Verwendung des ersten und zweiten Sensors (18, 20), Durchleiten der Kathodenstrahlröhre (10) zwischen beabstandeten ersten und zweiten Diamantschneideeinrichtungen (22, 24) in einer ersten Richtung, so dass gegenüberliegende Seiten der Kathodenstrahlröhre (10) durchschnitten werden, **dadurch gekennzeichnet, dass** das Verfahren zudem folgende Schritte umfasst:
Drehen der Kathodenstrahlröhre (10) durch einen Winkel von 90° und erneutes Durchleiten der Kathodenstrahlröhre (10) zwischen den beabstandeten ersten und zweiten Diamantschneideeinrichtungen (22, 24) in einer zweiten Richtung, die zu der ersten Richtung entgegengesetzt ist, so dass die anderen gegenüberliegenden Seiten der Kathodenstrahlröhre (10) durchschnitten werden und der Schirm (16) von dem Trichter abgetrennt wird.

16. Verfahren nach Anspruch 15, **dadurch gekennzeichnet, dass** die Bewegungsgeschwindigkeit der Kathodenstrahlröhre (10) durch die Sensoren (18, 20) und die Schneideeinrichtungen (22, 24) derart variiert wird, dass die Nutzung der Vorrichtung optimiert wird.

17. Verfahren nach Anspruch 15 oder 16, **dadurch gekennzeichnet, dass** die erste und die zweite Diamantschneideeinrichtung (22, 24) beabstandet werden je nach der Ablesung von den Außenabmessungen des Schirms (16), die von dem ersten und dem zweiten Sensor (18, 20) ermittelt wird.

18. Verfahren nach einem der Ansprüche 15 bis 17, **dadurch gekennzeichnet, dass** der Abstand zwischen der ersten und der zweiten Diamantschneideeinrichtung (22, 24) neu eingestellt wird nach dem ersten und vor dem zweiten Durchleiten der Kathodenstrahlröhre (10) zwischen den Schneideeinrichtungen (22, 24).

## Revendications

1. Appareil (12) de découpe d'un tube cathodique (10) comportant un cône et un écran (16), comprenant des moyens de support (14) pour supporter l'écran (16), des premiers et deuxièmes capteurs (18, 20) pour déterminer les dimensions externes de l'écran (16), des premiers et deuxièmes moyens de coupe au diamant (22, 24) espacés à une distance variable les uns des autres, des moyens de déplacement (26) pour déplacer les moyens de support (14) relativement aux moyens de coupe au diamant (22, 24) et des moyens rotatifs (42) pour ajuster la position angulaire des moyens de support (14) autour d'un axe vertical perpendiculaire au plan des moyens de support, l'appareil (12) étant adapté à opérer en déplaçant un tube cathodique (10) dans une première direction entre les moyens de coupe (22, 24) pour effectuer une première découpe, **caractérisé en ce que** l'appareil est adapté à opérer en faisant tourner l'organe de support (14) de 90° et en déplaçant le tube cathodique (10) dans une deuxième direction opposée à la première direction entre lesdits moyens de coupe (22, 24) pour effectuer une deuxième découpe.

2. Appareil selon la revendication 1, **caractérisé en ce que** les moyens de déplacement (26) sont adaptés à déplacer les moyens de support (14) relativement aux moyens de coupe au diamant (22, 24) à une vitesse variable.

3. Appareil selon la revendication 1, **caractérisé en ce que** les moyens de déplacement (26) sont constitués par une table (28) montée sur des rails parallèles (30, 32).

4. Appareil selon l'une quelconque des revendications précédentes, **caractérisé en ce que** les moyens de déplacement (26) sont entraînés par un moteur électrique ou hydraulique (38) à vitesse variable par l'intermédiaire d'un pignon et d'une crémaillère (34, 36).

5. Appareil selon l'une quelconque des revendications précédentes, **caractérisé en ce que** la position verticale des moyens de support (14), relativement aux premiers et deuxièmes moyens de coupe (22, 24), est ajustable.

6. Appareil selon l'une quelconque des revendications précédentes, **caractérisé en ce que** l'espacement des moyens de coupe au diamant (22, 24) est établi en réagissant à une lecture des dimensions externes de l'écran (16) déterminées par les premiers et deuxièmes capteurs (18, 20).

7. Appareil selon l'une quelconque des revendications précédentes, **caractérisé en ce que** les premiers et deuxièmes moyens de coupe au diamant (22, 24) sont chacun montés sur un chariot, dont l'axe de mouvement est perpendiculaire à l'axe de déplacement des moyens de support (14).

8. Appareil selon l'une quelconque des revendications précédentes, **caractérisé en ce que** les premiers et deuxièmes capteurs (18, 20) sont optiques ou ultrasonores.

9. Appareil selon l'une quelconque des revendications précédentes, **caractérisé en ce que** les moyens de coupe au diamant (22, 24) comprennent chacun une roue de coupe (44) dont la périphérie est revêtue de diamant.

10. Appareil selon l'une quelconque des revendications précédentes, **caractérisé en ce que** des deuxièmes moyens de support sont prévus pour le cône du tube cathodique (10).

11. Appareil selon l'une quelconque des revendications précédentes, **caractérisé en ce qu'**une brosse ou des brosses (56) sont disposées pour effectuer un mouvement satellitaire dans un plan perpendiculaire à l'axe vertical des moyens de support (14).

12. Appareil selon la revendication 11, **caractérisé en ce qu'**une extraction d'air (64) est prévue pour la brosse ou les brosses (56).

13. Appareil selon l'une quelconque des revendications précédentes, **caractérisé en ce qu'**une extraction d'air est prévue pour chacun des premiers et deuxièmes moyens de coupe au diamant (22, 24).

14. Appareil selon l'une quelconque des revendications précédentes, **caractérisé en ce que** l'appareil (12) est disposé dans une armoire (62), dont l'écoulement d'air est continuellement extrait et filtré pour retirer les particules véhiculées dans l'air.

15. Procédé de découpe d'un tube cathodique (10) comportant un cône et un écran (16), comprenant les étapes consistant à : supporter l'écran (16) du tube cathodique (10) par le dessous en utilisant des moyens de support (14), déterminer les dimensions externes de l'écran en utilisant des premiers et deuxièmes capteurs (18, 20), faire passer le tube cathodique (10) entre des premiers et deuxièmes moyens espacés de coupe au diamant (22, 24) dans une première direction pour effectuer une découpe sur des côtés opposés du tube cathodique (10) ; **caractérisé en ce que** le procédé comprend en outre les étapes consistant à :
- faire tourner le tube cathodique (10) d'un angle de 90 degrés et faire passer à nouveau le tube cathodique (10) entre les premiers et deuxièmes moyens espacés de coupe au diamant (22, 24) dans une deuxième direction, opposée à la première direction, pour effectuer une découpe sur les autres côtés opposés du tube cathodique (10), afin de séparer ainsi l'écran (16) du cône.

16. Procédé selon la revendication 15, **caractérisé en ce que** la vitesse du mouvement du tube cathodique (10), passant par les capteurs (18, 20) et les moyens de coupe (22, 24), est fait varier dans le but d'optimiser l'utilisation de l'appareil.

17. Procédé selon la revendication 15 ou 16, **caractérisé en ce que** les premiers et deuxièmes moyens de coupe au diamant (22, 24) sont espacés en réagissant à la lecture des dimensions externes de l'écran (16) déterminées par les premiers et deuxièmes capteurs (18, 20).

18. Procédé selon l'une quelconque des revendications 15 à 17, **caractérisé en ce que** l'espacement entre les premiers et deuxièmes moyens de coupe au diamant (22, 24) est remis à zéro entre les premier et deuxième passages du tube cathodique (10) entre les moyens de coupe (22, 24).
